# EUROPÄISCHE PATENTANMELDUNG

(11) **EP 3 715 946 A1**
(43) Veröffentlichungstag der Anmeldung: **30.09.2020**
(21) Anmeldenummer: 20155482.1
(22) Anmeldetag: 04.02.2020
(51) Int. Cl.: G03B 13/26, G03B 21/62

(54) **EINSTELLSCHEIBE FÜR OPTISCHE GERÄTE**

(30) Priorität: 27.03.2019 DE 202019101748 U
(71) Anmelder: Denz, Peter, 81673 München (DE)
(72) Erfinder: Denz, Peter, 81673 München (DE)
(74) Vertreter: Berkenbrink, Kai-Oliver

(57) **Zusammenfassung**

Einstellscheibe (10, 28) für ein optisches Gerät (20) umfassend einen lichtdurchlässigen Grundkörper (14) mit einer Stärke (D) in Richtung der optischen Achse des Grundkörpers (14), wobei in den Grundkörper (14) ein Referenzmuster (12) eingebracht ist und das Referenzmuster (12) von jeweils wenigstens Stärke(D)/100 von jeder Oberfläche (O) des Grundkörpers (14) beabstandet ist und damit innerhalb des Grundkörpers (14) liegt.

## Beschreibung

Die Erfindung betrifft eine Einstellscheibe für optische Einrichtungen bzw. Geräte, insbesondere kinematographische Apparate. Solche gattungsgemäßen Einstellscheiben werden auch als Mattscheiben bezeichnet. Mit einer solchen Einstellscheibe kann bei optischen Einrichtungen, insbesondere bei Kameras oder Motivsuchern, ein Bild über einen Sucher betrachtet werden, das durch das auf einer Einstellscheibe aufgebrachte Muster überlagert wird. Zur Einordnung des Bildes ist das Muster in Form eines Referenzmusters ausgebildet, die eine Relation des gesehenen Bildes zu einer Aufnahme des Bildes ermöglicht.

Das Referenzmuster kann abhängig vom gewünschten Aufnahmeformat gewählt werden.

Es ist bekannt, dass solche Referenzmuster durch Beschichten und anschließendes Ätzen auf ein Grundmaterial der Einstellscheibe aufgebracht werden.

Auf diese Weise können sehr genaue Referenzmuster erzeugt werden.

Diese Art der Herstellung hat jedoch den Nachteil, dass bei der Reinigung die aufgebrachten Referenzmuster in Mitleidenschaft gezogen werden können.

Es ist Aufgabe der Erfindung eine Einstellscheibe anzugeben, die sich besser reinigen lässt.

Die Aufgabe wird durch den Anspruch 1 gelöst.

Die Unteransprüche bilden vorteilhafte Weiterbildungen der Erfindung.

Erfindungsgemäß umfasst eine Einstellscheibe für eine optische Einrichtung einen lichtdurchlässigen Grundkörper, insbesondere eine Scheibe, mit einer vordefinierten Stärke. In den Grundkörper ist erfindungsgemäß ein Referenzmuster so eingebracht, dass die Referenzstruktur von jeweils wenigstens Stärke/100 von jeder Oberfläche des Grundkörpers beabstandet ist und damit innerhalb des Grundkörpers, insbesondere der Scheibe liegt.

Dadurch wird die Oberfläche unempfindlich und kann auf einfachere Weise nachbehandelt werden. Dies kann sowohl die Mattierung als auch die Reinigung betreffen.

Bevorzugt ist in der Einstellscheibe ein räumliches Referenzmuster eingebracht, was die Wirkung bei der Einstellung eines Bildausschnitts für den Einstellenden positiv beeinflusst. So kann sich das Referenzmuster in Stärkenrichtung wenigstens über 0,1 mm erstrecken.

Üblicherweise können die Referenzmuster in der Art einer Strichplatte ausgebildet sein. So kann das Referenzmuster eine Skalierung aufweisen.

Bevorzugt ist das Referenzmuster mit einem CO₂- Laser in die Einstellscheibe eingebracht worden. Eine solche Anordnung weist eine ausreichende Genauigkeit zur Herstellung der vorgenannten Referenzmuster auf.

Gemäß einer vorteilhaften Weiterbildung der Erfindung kann das Material der Einstellscheibe ein optisches Glas sein. Ein optisches Glas ist mittels eines Lasers gut bearbeitbar und weist die für eine Einstellscheibe notwendigen optischen Eigenschaften auf.

Ferner kann die Einstellscheibe vollständig transparent ein- oder beidseitig mattiert sein.

Die Einstellscheibe kann zudem mit einer Fresnel-Linse verbunden sein.

Gemäß einem weiteren Aspekt der Erfindung betrifft diese, ein optisches Gerät umfassend einen Sucher und eine Objektivaufnahme. Im Strahlengang zwischen dem Sucher und der Objektivaufnahme in einer Scheibenaufnahme ist eine Einstellscheibe, wie sie zuvor beschrieben wurde, angeordnet.

Das Bild wird dann für den durch den Sucher blickenden Betrachter mit dem Referenzmuster überlagert.

Ein erfindungsgemäßes optisches Gerät kann eine Filmkamera, eine Foto-Kamera oder ein Objektsucher sein.

Bevorzugt kann vorgesehen sein, dass in der Scheibenaufnahme Lichtquellen angeordnet sind, die quer zur optischen Achse Licht in die Einstellscheibe einbringen, das sich an den Referenzstrukturen bricht.

Dadurch kann das Referenzmuster beleuchtet werden, wodurch der Kontrast zum Bild erhöht werden kann. Ferner kann es vorteilhaft sein, die Beleuchtung an die Umgebungsverhältnisse, insbesondere im Hinblick auf die Helligkeit oder die Farbgebung, anzupassen.

Die Objektivaufnahme eignet sich insbesondere für die Aufnahme für ein Mittelformatobjektiv. Mittelformat-Aufnahmegeräte benötigen in der Regel flächenmäßig größer dimensionierte Einstellscheiben, um eine realistische Abbildung zu ermöglichen.

Der Aufwand zur Herstellung einer erfindungsgemäßen Einsteilscheibe ist insbesondere dafür geringer.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine schematische Ansicht einer Einstellscheibe in einer Draufsicht;
- Fig. 1b: eine schematische Ansicht einer erfindungsgemäßen Einstellscheibe, gemäß Fig. 1a in einer Schnittansicht b-b, und
- Fig. 2: eine schematische Darstellung eines erfindungsgemäßen optischen Geräts,

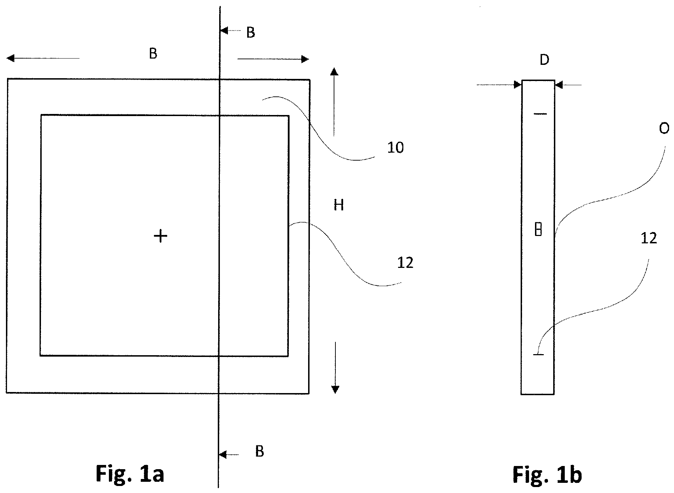

Fig. 1 a zeigt eine Einstellscheibe bzw. Mattscheibe 10, die einen transparenten Grundkörper 14 mit einem eingebrachten Referenzmuster 12 aufweist, in einer Draufsicht. Das Referenzmuster 12 umfasst einen Rahmen und ein zentrales Fadenkreuz. Der Rahmen gibt die Größe des potentiellen Aufnahmebereichs an.

Fig. 1b zeigt eine Schnittansicht B-B der Einstellscheibe 10, wobei der Grundkörper 14 der Einstellscheibe 10 die Stärke D aufweist, Wie gut an der Darstellung zu erkennen ist, erstreckt sich das Referenzmuster 12 über etwa ein Drittel der Stärke D der Einstellscheibe 10. Die Tiefe des Referenzmusters kann anwendungsspezifisch angepasst sein, weist allerdings einen Abstand zu jeder Oberfläche O der Einstellscheibe 10 auf.

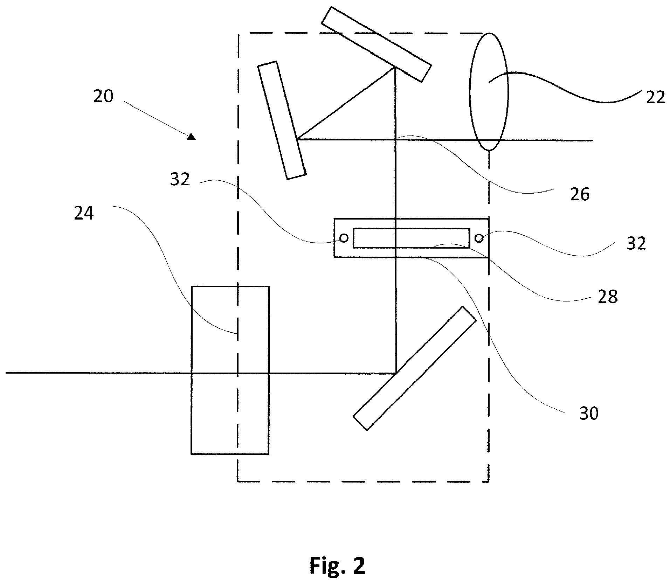

Fig. 2 zeigt eine grundsätzliche Anordnung eines erfindungsgemäßen optischen Geräts 20, insbesondere eines kinematographischen Apparats. Das optische Gerät 20 umfasst einen Sucher 22 und eine Objektivaufnahme 24, in welche unterschiedliche Objektive eingesetzt werden können. Ein Benutzer kann auf diese Weise ein Bild durch das Objektiv über den Sucher 22 betrachten. Zwischen dem Sucher 22 und der Objektivaufnahme 24 liegt eine erfindungsgemäße Einstellscheibe 28. Die Einstellscheibe 28 kann analog der Beschreibung von Fig. 1a und Fig. 1b ausgeführt sein. Die Einstellscheibe 28 ist bevorzugt austauschbar in einer Einstellscheibenaufnahme 30 aufgenommen. Auf diese Weise können unterschiedliche Einstellscheiben 28 bedarfsweise eingesetzt werden. Erfindungsgemäß kann ferner vorgesehen sein, dass die Einstellscheibenaufnahme 30 mit Leuchtmitteln, insbesondere mit LEDs 32 versehen ist, die ihr Licht quer zur optischen Achse der Einstellscheibe einbringen. Auf diese Weise bricht das Licht an den in das Glas eingelaserten Referenzmustern und hebt diese farblich hervor.

Die Darstellung gemäß Fig. 2 ist eine rudimentäre Darstellung des optischen Geräts, so wurde beispielsweise auf die Darstellung und Beschreibung einer Feldlinse zwischen der Einstellscheibe 28 und dem Sucher 22 verzichtet. Eine solche Feldlinse könnte beispielsweise mit der Einstellscheibe verbunden sein oder zusätzlich im Anschluss an die Einstellscheibe angeordnet sein. So könnten austauschbare Einstellscheiben 28 ohne Feldlinse in dem Gerät 20 verwendet werden.

### Bezugszeichenliste

- 10: Einstellscheibe
- 12: Referenzmuster
- 14: Grundkörper
- 20: optisches Gerät
- 22: Sucher
- 24: Objektivaufnahme
- 26: Strahlengang
- 28: Einstellscheibe
- 30: Einstellscheibenaufnahme
- 32: LED
- H: Höhe
- 8: Breite
- D: Stärke
- O: Oberfläche

## Patentansprüche

1. Einstellscheibe (10, 28) für ein optisches Gerät (20) umfassend einen lichtdurchlässigen Grundkörper (14) mit einer Stärke (D) in Richtung der optischen Achse des Grundkörpers (14), wobei in den Grundkörper (14) ein Referenzmuster (12) eingebracht ist und das Referenzmuster (12) von jeweils wenigstens Stärke(D)/100 von jeder Oberfläche (O) des Grundkörpers (14) beabstandet ist und damit innerhalb des Grundkörpers (14) liegt.

2. Einstellscheibe nach Anspruch 1, **dadurch gekennzeichnet, dass** das Referenzmuster (12) ein räumliches ist, die sich in Richtung der Stärke (D) erstreckt.

3. Einstellscheibe nach Anspruch 1 oder 2, **dadurch gekennzeichnet, dass** das Referenzmuster (12) in der Art einer Strichplatte ausgebildet ist.

4. Einstellscheibe nach einem der vorangehenden Ansprüche, **dadurch gekennzeichnet, dass** das Referenzmuster (12) mittels eines CO₂-Lasers eingebracht ist.

5. Einstellscheibe nach einem der vorangehenden Ansprüche, **dadurch gekennzeichnet, dass** der Grundkörper (14) aus einem optischen Glas ist.

6. Einstellscheibe nach einem der vorangehenden Ansprüche, **dadurch gekennzeichnet, dass** der Grundkörper (14) vollständig transparent ein- oder beidseitig mattiert ist.

7. Einstellscheibe nach einem der vorangehenden Ansprüche, **dadurch gekennzeichnet, dass** der Grundkörper (14) stoffschlüssig mit einer Feldlinse bzw. Fresnel-Linse verbunden ist.

8. Optisches Gerät (20) umfassend einen Sucher (22) und eine Objektivaufnahme (24), wobei im Strahlengang (26) zwischen dem Sucher (22) und der Objektivaufnahme (24) in einer Scheibenaufnahme (30) eine Einstellscheibe (28) nach einem der vorangehenden Ansprüche angeordnet ist.

9. Optisches Gerät nach Anspruch 8, **dadurch gekennzeichnet, dass** in der Scheibenaufnahme (30) Lichtquellen (32) angeordnet sind, die quer zur optischen Achse Licht in die Einstellscheibe (28) einbringen, das sich an dem Referenzmuster (12) bricht.

10. Optisches Gerät nach Anspruch 8 oder 9, **dadurch gekennzeichnet, dass** die Objektivaufnahme (24) eine Aufnahme für ein Mittelformatobjektiv ist.
